# EUROPÄISCHE PATENTSCHRIFT

(11) **EP 0 396 032 B1**
(45) Veröffentlichungstag und Bekanntmachung des Hinweises auf die Patenterteilung: **03.11.1993**
(21) Anmeldenummer: 90108021.8
(22) Anmeldetag: 27.04.1990
(51) Int. Cl.: B27B 31/00, B27B 5/22, B23Q 7/10

(54) **Ablängvorrichtung**
Device for cross-cutting workpieces to desired lengths
Dispositif à coupe transversale pour couper des pièces à longueur

(30) Priorität: 29.04.1989 DE 3914320
(43) Veröffentlichungstag der Anmeldung: 07.11.1990
(73) Patentinhaber: MASCHINENBAU KALLFASS GMBH & CO., D-72270 Baiersbronn (DE)
(72) Erfinder: Kallfass, Ernst, D-7292 Baiersbronn 6 (DE)
(74) Vertreter: Ott, Elmar, Dipl.-Ing.

(56) Entgegenhaltungen:
- CH-A- 345 147
- DE-A- 2 103 733
- DE-A- 2 540 985
- DE-A- 3 300 351
- FR-A- 2 550 120
- GB-A- 2 052 420
- US-A- 2 911 081
- US-A- 3 486 602

## Beschreibung

Die Erfindung betrifft eine Ablängvorrichtung für Bretter, Kanthölzer oder dergleichen mit Fördereinrichtungen und einer Ablängsäge, wobei die Fördereinrichtungen über Umlenkrollen geführte, parallel angeordnete Transportketten oder dergleichen besitzen, die das abzulängende Gut zur Ablängsäge transportieren.

In derartigen Ablängvorrichtungen können beispielsweise Bretter oder Kanthölzer gleicher Länge mehrfach abgelängt werden. Zu diesem Zweck können die quer zur Transportrichtung liegenden Bretter einer Ablängsäge mit im Abstand angeordneten Sägeblättern zugeführt werden. Der Abstand der Sägeblätter bestimmt somit die Länge der abgelängten Bretter. Bei herkömmlichen Ablängvorrichtungen werden die Bretter zunächst vereinzelt, d.h. daß die Bretter im Abstand hintereinanderliegend mittels Transportketten zur Ablängsäge transportiert werden. Mittels Mitnehmer, die an den Transportketten nach außen abstehen, werden die Bretter durch die Ablängsäge geführt. Anschließend müssen die einzeln abgelängten Bretter wieder zu einer Lage zusammengeführt werden, damit ein lageweises Ablegen der Bretter möglich ist.

Der Erfindung liegt die Aufgabe zugrunde, eine Ablängvorrichtung der eingangs genannnten Gattung derart weiterzubilden, daß das abzulängende Gut nicht einzeln, sondern lagenweise abgelängt wird.

Die Lösung dieser Aufgabe wird bei einer Ablängeinrichtung der eingangs genannten Gattung dadurch erhalten, daß in Transportrichtung vor der Ablängsäge ein Stauförderer angeordnet ist, der wenigstens einen absenkbaren Anschlag hat, an dem das abzulängende Gut aufgestaut wird, und daß im Abstand vom Anschlag ein Lagentrenner vorgesehen ist, der eine am Anschlag aufgestaute Lage des abzulängenden Guts am Lagenende von weiterem Gut abtrennt. Auf diese Weise ist es möglich, die zwischen Anschlag und Lagentrenner aufgestaute Lage in ihrer Gesamtheit zur Ablängsäge weiterzutransportieren, wo die Lage dann auf das eingestellte Maß abgelängt wird. Die abgelängte Lage läßt sich dann in einem Arbeitsgang auf Ablegearme transportieren, die die Lage dann auf einem Stapel ablegen können. Dadurch, daß die dem Stauförderer nachgeordnete Ablängsäge als Fördereinrichtung gezahnte Transportketten hat, ist sichergestellt, daß jeweils das mit dem Sägeblatt in Berührung befindliche Brett durch die an der Schnittkante vom Sägeblatt ausgeübte vertikale Kraftkomponente in die Verzahnung etwas eingedrückt wird und dadurch sicher von den nebeneinander angeordneten Transportketten durch die Ablängsäge transportiert werden kann. Hier kann auch eine Oberdruckrolle oder dergleichen zusätzlich zu diesem Zweck vorgesehen sein.

Der Abstand zwischen Anschlag und Lagentrenner ist vorzugsweise einstellbar ausgebildet, damit die Länge der jeweils abzulängenden Lage einstellbar ist.

Der Anschlag und der Lagentrenner sind jeweils mittels Antriebs vertikal verschiebbar, damit durch Absenken des Anschlags die aufgestaute Lage zur Ablängsäge weitertransportiert werden kann. Der Lagentrenner wird angehoben, um das Ende der Lage beispielsweise durch Festklemmen des nächsten Brettes zu bestimmen. Die Lagenbreite läßt sich somit sehr einfach festlegen. Besonders vorteilhaft ist es, den Lagentrenner auf einer Längsführung zu befestigen, die an ihrem, dem Anschlag abgewandten Ende schwenkbar gelagert ist. Die Längsführung kann auch parallelverschiebbar angeordnet sein. Die Längsführung wird dabei vorzugsweise mittels eines Zylinders in der Höhe verschwenkt. Die Einstellung des Lagentrenners ist entlang einer stabförmigen Längsführung sehr einfach, wobei auch der Antrieb in Form eines ortsfest angeordneten Zylinders sehr einfach ist.

Im Bereich des Stauförderers ist oberhalb der Transportebene vorzugsweise eine Lagenführung angeordnet, die gleichzeitig als Gegenhalter für die Lagentrenner dient. Der Lagentrenner kann somit ein über ihm befindliches Brett oder dergleichen gegen die Lagenführung pressen und somit in dieser Position festklemmen. Die vor dem festgeklemmten Brett befindlichen Bretter können nun vom Kettenförderer zur Ablängsäge gemeinsam weitertransportiert werden.

Im Bereich des Stauförderers sind die Transportketten vorzugsweise glatt ausgebildet, d.h. daß die Transportketten vorzugsweise gerade Laschen bzw. gerade Kettenglieder haben. Durch die dadurch erhaltene glatte Transportfläche können die Bretter problemlos an einem Anschlag hintereinander aufgestaut werden, wobei die glatten Transportketten unterhalb der aufgestauten Bretter hindurchrutschen können.

Die Transportketten im Bereich der Mehrfachablängsäge besitzen Mitnehmer, die in einem größeren Abstand hintereinander angeordnet sind, als die maximale Breite einer abzulängenden Lage. Die Mitnehmer können somit jeweils am letzten Brett der abgetrennten Lage angreifen, um die Lage problemlos durch die Ablängsäge zu befördern.

Vor den Sägeblättern sind unterhalb der Förderebene anhebbare Auflageschienen zweckmäßig, die unmittelbar vor dem Ablängvorgang geringfügig über die Transportebene angehoben sind. Die zur Ablängsäge transportierte Lage wird dadurch solange nicht weitertransportiert, bis der Mitnehmer der Transportkette am letzten Brett der Lage angreift und diese parallel zueinander ausrichtet. Gleichzeitig wird stirnseitig ein Lineal gegen die Lage gefahren, das die Teile längs zueinander und auf die Anschlagsäge ausrichtet. Die Auflageschienen werden dann wieder abgesenkt, damit die Lage auf den gezahnten Transportketten zu liegen kommt.

Eine Weiterbildung der Erfindung sieht vor, daß hinter der Ablängsäge eine Stapeleinrichtung angeordnet ist, die die jeweils abgelängte Lage auf Ablegearme schiebt, die an Abstreifern die auf ihnen abgelegte Lage auf einen Stapel abstreifen. Durch diese Maßnahme kann jeweils eine abgelängte Lage komplett aufgestapelt werden.

Gemäß einer besonders vorteilhaften Weiterbildung der Erfindung ist vorgesehen, daß vor dem Lagentrenner exzentrisch gelagerte Walzen als Querförderer angeordnet sind, deren Achsen in Transportrichtung der Förderketten liegen und die Rotation mit ihrer Mantelfläche zyklisch an der Transportebene oben heraustreten. Entsprechend der Drehrichtung der exzentrisch gelagerten Walzen läßt sich somit das abzulängende Gut seitlich gegen einen Anschlag transportieren, wodurch eine einheitliche Ausrichtung sämtlicher abzulängenden Bretter oder dergleichen erreicht wird.

Die Erfindung wird nachfolgend anhand der Zeichnung näher erläutert.

Es zeigen:
Figur 1 den Aufbau einer erfindungsgemäßen Ablängvorrichtung mit Stapeleinrichtung und
Figur 2 einen Ausschnitt aus der in Figur 1 dargestellten Ablängvorrichtung im Bereich des Stauförderers.

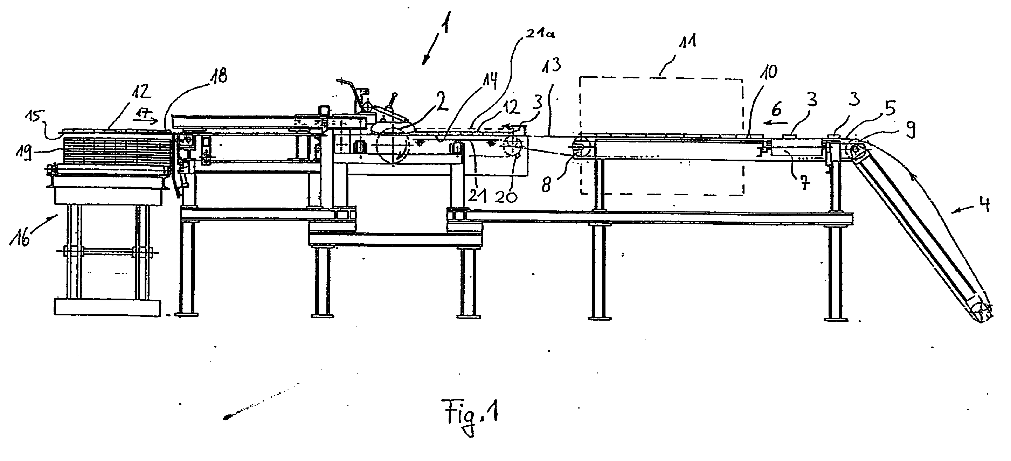

Die in Figur 1 dargestellte Anlage ist in der Seitenansicht dargestellt und besitzt eine Ablängsäge 1, die mehrere hintereinander im Abstand angeordnete Sägeblätter 2 besitzen kann. Das abzulängende Gut sind im dargestellten Beispiel Bretter 3, die über eine Vereinzelungseinrichtung 4 in die waagrechte Transportebene 5 gebracht werden. Die Bretter 3 werden dann in Transportrichtung 6 durch die Anlage transportiert, wobei zunächst exzentrisch gelagerte Walzen 7 die Bretter 3 gegen einen hier nicht dargestellten seitlichen Anschlag quer zur Transportrichtung 6 verschieben.

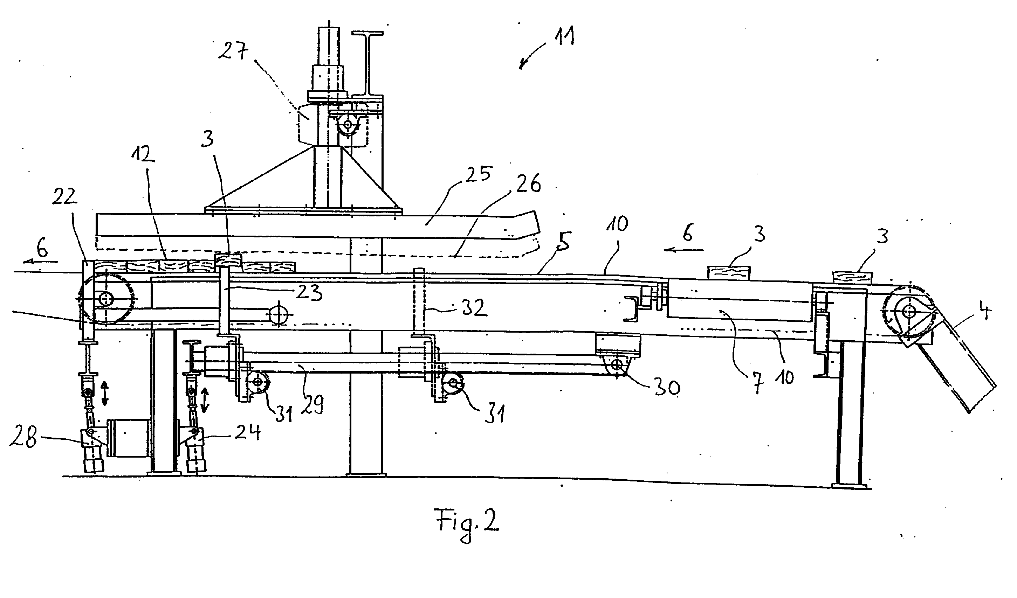

Mittels über Umlenk- und Antriebrollen 8, 9 geführte Transportketten 10, die im Abstand nebeneinander angeordnet sind, werden die Bretter 3 durch den Stauförderer 11 transportiert. Weitere Einzelheiten des Stauförderers 11 sind in Figur 2 dargestellt.

Im Stauförderer 11 werden die nacheinander ankommenden Bretter 3 zu einer Lage 12 aufgestaut und lagenweise der Ablängsäge 1 über Transportketten 13, 14 zugeführt. Die Transportkette 13, 14 weist nach oben gerichtete Verzahnungen auf, die an der Unterseite der Bretter der Lage 12 in diese beim Ablängvorgang eingreifen.

Nach Durchlaufen der Ablängsäge 1, deren Sägeblätter 2 die mit Pfeil angegebene Drehrichtung haben, gelangt die Lage 12 auf Ablegearme 15, die in die dargestellte Stellung nach links über eine Stapeleinrichtung 16 längsverschiebbar sind. Die auf ihnen abgelegte Lage 12 wird durch Zurückziehen der Ablegearme 15 in Richtung 17 an einem verschwenkbaren Abstreifer 18 abgestreift, so daß die Lage 12 auf den Stapel 19 gelangt. Der Stapel 19 kann zuvor angehoben werden, damit zur Lage 12 kein Abstand beim Abstreifen besteht.

Die Transportkette 14 der Ablängsäge 1 besitzt in verhältnismäßig großem Abstand angeordnete Mitnehmer 20, die jeweils am letzten Brett 3 der Lage 12 rückseitig angreifen. Da die Bretter innerhalb der Lage 12 längs und quer noch nicht genau zueinander ausgerichtet sind, sind unterhalb der Transportebene im Bereich der Transportkette 14 anhebbare Auflageschienen 21 vorgesehen, die die Lage 12 von unten anheben können. Der Weitertransport der Lage 12 kann dadurch solange trotz laufender Transportkette 14 gestoppt werden, bis deren Mitnehmer 20 am letzten Brett 3 der Lage 12 zur Anlage kommt wobei die Lage 20 über ein längsverfahrbares Lineal 21 a längsausgerichtet und durch die Mitnehmer 20 parallel nebeneinander liegend angeordnet wird. Die Auflageschienen 21, die im seitlichen Abstand nebeneinander angeordnet sind, werden dann wieder nach unten abgesenkt, so daß die Lage 12 nun an den Mitnehmern zu den Sägeblättern 2 auf der Kette 14 weitertransportiert wird.

In Figur 2 sind insbesondere die Einrichtungen des Stauförderers 11 ersichtlich. Der Stauförderer 11 hat eine Transportkette 10 mit glatten Laschen bzw. mit glatten Gliedern, um eine möglichst glatte Transportebene 5 zu erhalten. Die in Transportrichtung 6 auf der Kette 10 weitertransportierten Bretter 3 gelangen an einen absenkbaren Anschlag 22, an dem die Bretter zu einer Lage 12 aufgestaut werden. Das Ende der Lage 12 wird durch einen Lagentrenner 23 bestimmt, der mittels eines Hubzylinders 24 in die dargestellte Position angehoben werden kann. Dabei wird das über ihm liegende Brett 3 gegen die Unterseite einer Lagenführung 25 gedrückt und dabei festgeklemmt. Die Lagenführung 25 muß dabei die mit unterbrochener Linie 26 dargestellte Position einnehmen. Die oberere mit durchgezogener Linie dargestellte Position der Lagenführung 25 wird bei entsprechend dickeren Brettern oder Kanthölzern verwendet. Mittels einer Antriebeinrichtung 27 kann die Lagenführung 25 in die dem abzulängenden Gut angepaßte Höhe gebracht werden.

Der Anschlag 22 ist ebenso wie der Lagentrenner 23 mittels einem Hubzylinders 28 vertikal verschiebbar. Wird der Anschlag 22 unter die Transportebene 5 gesenkt, so wird die Lage 12 in Transportrichtung 6 zur Ablängsäge 1 weitertransportiert.

Der Lagentrenner 23 ist auf einer stabförmigen Längsführung 29 längsverschiebbar befestigt, wobei die Längsführung 29 um ein Schwenklager 30 mittels des Hubzylinders 24 verschwenkbar ist. Der Lagentrenner 23 kann mittels einer Feststelleinrichtung 31 an jeder beliebigen Stelle der Längsführung 29 festgestellt werden. Eine zweite Position des Lagentrenners 23 für übliche Lagenbreiten ist mit unterbrochenen Linien 32 beispielsweise dargestellt.

## Patentansprüche

1. Ablängvorrichtung für Bretter, Kanthölzer oder dergleichen mit Fördereinrichtungen und einer Ablängsäge, wobei die Fördereinrichtungen über Umlenkrollen geführte, parallel angeordnete Transportketten oder dergleichen besitzen, die das abzulängende Gut zur Ablängsäge transportieren, und mit einem in Transportrichtung vor der Ablängsäge angeordneten Stauförderer, der wenigstens einen absenkbaren Anschlag hat, an dem das abzulängende Gut aufgestaut wird, **dadurch** **gekennzeichnet**, daß im Abstand vom Anschlag (22) ein Lagentrenner (23) vorgesehen ist, der eine am Anschlag (22) aufgestaute Lage (12) des abzulängenden Guts am Lagenende von weiterem Gut abtrennt, und daß die dem Stauförderer (11) nachgeordnete Ablängsäge (1) als Fördereinrichtung gezahnte Transportketten (14) hat.

2. Ablängvorrichtung nach Anspruch 1, **dadurch** **gekennzeichnet**, daß der Abstand zwischen Anschlag (22) und Lagentrenner (23) einstellbar ist.

3. Ablängvorrichtung nach einem der Ansprüche 1 oder 2, **dadurch gekennzeichnet**, daß der Anschlag (22) und der Lagentrenner (23) jeweils mittels eines Antriebs (28; 24) vertikal verschiebbar ist.

4. Ablängvorrichtung nach einem der vorhergehenden Ansprüche, **dadurch gekennzeichnet**, daß der Lagentrenner (23) auf einer Längsführung (29) befestigt ist, die an ihrem, dem Anschlag (22) abgewandten Ende schwenkbar gelagert oder parallelverschiebbar gelagert ist.

5. Ablängvorrichtung nach Anspruch 4, **dadurch** **gekennzeichnet**, daß die Längsführung (29) mittels eines Hubzylinders (24) verschwenkbar ist.

6. Ablängvorrichtung nach einem der vorhergehenden Ansprüche, **dadurch gekennzeichnet**, daß der Lagentrenner (23) in seiner oberen Stellung das über ihm befindliche Brett (3) oder dergleichen festklemmt.

7. Ablängvorrichtung nach Anspruch 6, **dadurch** **gekennzeichnet**, daß der Stauförderer (11) eine über seiner Transportbahn angeordnete Lagenführung (25) hat, die als Führung für die Lage (12) und als Gegenhalter für den Lagentrenner (23) dient.

8. Ablängvorrichtung nach einem der vorhergehenden Ansprüche, **dadurch gekennzeichnet**, daß die Transportketten (10) im Bereich des Stauförderers (11) eine weitgehend glatte Transportebene (5) durch die Verwendung gerader Kettenglieder bildet.

9. Ablängvorrichtung nach Anspruch 1, **dadurch** **gekennzeichnet**, daß die gezahnten Transportketten (14) Mitnehmer (20) haben, die in einem größeren Abstand hintereinander angeordnet sind, als die maximale Breite einer abzulängenden Lage (12).

10. Ablängvorrichtung nach Anspruch 9, **dadurch** **gekennzeichnet**, daß die Fördereinrichtung der Ablängsäge (1) vor den Sägeblättern (2) angeordnete, anhebbare Auflageschienen (21) hat.

11. Ablängvorrichtung nach einem der vorhergehenden Ansprüche, **dadurch gekennzeichnet**, daß hinter der Ablängsäge (1) eine Stapeleinrichtung (16) angeordnet ist, die die jeweils abgelängte Lage (12) auf Ablegearme (15) schiebt, die an Abstreifern (18) die auf ihnen abgelegte Lage (12) auf einen Stapel (19) abstreifen.

12. Ablängvorrichtung nach einem der vorhergehenden Ansprüche, **dadurch gekennzeichnet**, daß vor dem Lagetrenner (23) exzentrisch gelagerte Walzen (7) als Querförderer angeordnet sind, deren Achsen in Transportrichtung der Förderketten liegen und die bei Rotation mit ihrer Mantelfläche zyklisch an der Transportebene (5) oben heraustreten.

## Claims

1. Device for cutting boards, squared timber or the like to length, with conveyor devices and a cross-cut saw, the conveyor devices having parallel conveyor chains or the like, led over deflecting rollers, and conveying to the cross-cut saw the material which is to be cut to length, and with an accumulating conveyor which is arranged in front of the cross-cut saw in the conveying direction and has at least one stop member which can be lowered and against which the material to be cut to length is accumulated, characterised in that at a distance from the stop member (22) a layer separator (23) is provided which separates a layer (12) of the material to be cut to length that is accumulated against the stop member (22) from the further material, at the end of the layer, and that the cross-cut saw (1) arranged downstream of the accumulating conveyor (11) has toothed conveyor chains (14) as the conveyor device.

2. Length-cutting device according to Claim 1, characterised in that the distance between the stop member (22) and the layer separator (23) is adjustable.

3. Length-cutting device according to either of Claims 1 and 2, characterised in that the stop member (22) and the layer separator (23) are each vertically displaceable by means of a drive (28; 24).

4. Length-cutting device according to one of the preceding Claims, characterised in that the layer separator (23) is fastened on a longitudinal guide (29) which at its end remote from the stop member (22) is mounted so as to be pivotable or to be displaceable parallel to itself.

5. Length-cutting device according to Claim 4, characterised in that the longitudinal guide (29) is pivotable by means of a lifting cylinder (24).

6. Length-cutting device according to one of the preceding Claims, characterised in that the layer separator (23) in its upper position firmly clamps the board (3) or the like which is located above it.

7. Length-cutting device according to Claim 6, characterised in that the accumulating conveyor (11) has a layer guide (25) which is arranged over its conveyor path and which serves as a guide for the layer (12) and as a counter-clamp for the layer separator (23).

8. Length-cutting device according to one of the preceding Claims, characterised in that the conveyor chains (10), in the region of the accumulating conveyor (11), form a generally smooth conveying plane (5) through the use of straight chain links.

9. Length-cutting device according to Claim 1, characterised in that the toothed conveyor chains (14) have carrier members (20) which are arranged at a distance one behind the other which is greater than the maximum width of a layer (12) to be cut to length.

10. Length-cutting device according to Claim 9, characterised in that the conveyor device of the cross-cut saw (1) has support rails (21) which are arranged in front of the saw blades (2) and can be lifted up.

11. Length-cutting device according to one of the preceding Claims, characterised in that behind the cross-cut saw (1) there is arranged a stacking device (16) which pushes each cut-to-length layer (12) onto depositing arms (15) which against stripper members (18) strip off onto a stack (19) the layer (12) deposited on them.

12. Length-cutting device according to one of the preceding Claims, characterised in that in front of the layer separator (23) there are arranged eccentrically mounted rollers (7) as transverse conveyors, the axes of which lie in the conveying direction of the conveyor chains and which, on rotation, emerge cyclically at the top with their outer surface on the conveying plane (5).

## Revendications

1. Dispositif de débitage de planches, de bois équarris ou matériaux similaires, comprenant des systèmes de convoyage et une scie tronçonneuse, les systèmes de convoyage comportant des chaînes transporteuses ou pièces similaires qui sont guidées par l'intermédiaire de rouleaux de renvoi, sont disposées parallèlement et acheminent le matériau à débiter vers la scie trançonneuse ; ainsi qu'un convoyeur de retenue disposé en amont de la scie tronçonneuse dans la direction du transport, et muni d'au moins une butée abaissable contre laquelle le matériau à débiter est arrêté, caractérisé par le fait qu'un séparateur de couches (23) est prévu à distance de la butée (22) et sépare une couche (12) du matériau à débiter, arrêtée contre la butée (22), d'avec le reste du matériau à l'extrémité de cette couche ; et par le fait que la scie tronçonneuse (1), disposée en aval du convoyeur de retenue (11), présente des chaînes transporteuses dentées (14) faisant fonction de système de convoyage.

2. Dispositif de débitage selon la revendication 1, caractérisé par le fait que la distance comprise entre la butée (22) et le séparateur de couches (23) est réglable.

3. Dispositif de débitage selon l'une des revendications 1 ou 2, caractérisé par le fait que la butée (22) et le séparateur de couches (23) peuvent être animés de coulissements verticaux au moyen d'un entraînement respectif (28 ; 24).

4. Dispositif de débitage selon l'une des revendications précédentes, caractérisé par le fait que le séparateur de couches (23) est fixé sur un guide longitudinal (29) monté à pivotement ou à coulissement parallèle à son extrémité tournée à l'opposé de la butée (22).

5. Dispositif de débitage selon la revendication 4, caractérisé par le fait que le guide longitudinal (29) peut pivoter au moyen d'un vérin de levage (24).

6. Dispositif de débitage selon l'une des revendications précédentes, caractérisé par le fait que, dans sa position supérieure, le séparateur de couches (23) verrouille par coincement la planche (3) ou la pièce similaire qui lui est sus-jacente.

7. Dispositif de débitage selon la revendication 6, caractérisé par le fait que le convoyeur de retenue (11) présente un guide-couches (25) qui est disposé au-dessus de sa piste de transport, et sert de guide pour la couche (12) et de contre-butée pour le séparateur de couches (23).

8. Dispositif de débitage selon l'une des revendications précédentes, caractérisé par le fait que les chaînes transporteuses (10) forment, dans la région du convoyeur de retenue (11), un plan de transport (5) principalement lisse grâce à l'utilisation de chaînons rectilignes.

9. Dispositif de débitage selon la revendication 1, caractérisé par le fait que les chaînes transporteuses dentées (14) présentent des organes d'entraînement (20) qui sont agencés, en succession, avec distance supérieure à la largeur maximale d'une couche (12) à débiter.

10. Dispositif de débitage selon la revendication 9, caractérisé par le fait que le système de convoyage de la scie tronçonneuse (1) présente des glissières d'appui (21) relevables et disposées en amont des lames de scie (2).

11. Dispositif de débitage selon l'une des revendications précédentes, caractérisé par le fait qu'un système d'empilement (16), implanté derrière la scie tronçonneuse (1), pousse la couche respectivement débitée (12) sur des bras récepteurs (15) déposant sur une pile (19), par des racleurs (18), la couche (12) qui est recueillie sur lesdits bras.

12. Dispositif de débitage selon l'une des revendications précédentes, caractérisé par le fait que des cylindres (7) à montage excentré sont installés, en tant que convoyeurs transversaux, en amont du séparateur de couches (23), les axes de ces cylindres étant situés dans la direction du transport des chaînes convoyeuses, et lesdits cylindres saillant cycliquement vers le haut au-delà du plan de transport (5), lors d'une rotation, par leur surface péripherique.
